# EUROPEAN PATENT APPLICATION

(11) **EP 2 091 189 A1**
(43) Date of publication of application: **19.08.2009**
(21) Application number: 08151355.8
(22) Date of filing: 13.02.2008
(51) Int. Cl.: H04L 12/56, H04W 84/08

(54) **Re-activated group communication**

(71) Applicant: Nokia Siemens Networks Oy, 02610 Espoo (FI)
(72) Inventor: Dostal, Pavel, 79828 Morice (CZ); Sedlacek, Ivo, 66434 Kurim (CZ)
(74) Representative: Äkräs, Tapio Juhani

(57) **Abstract**

An improved method for re-activating a terminated group session. A server responsible for controlling the connection stores associated participant information identifying clients that participated or were intended to participate the connection. This associated participant information is provided to the client when a negative response to the request for re-joining the connection needs to be given. The client can then re-activate the communication by re-initing the connection. The roles and responsibilities of the continued connection are more consistent and still, the task of storing the information for the continued connection takes place in the element where it is most appropriately done.

## Description

### FIELD OF THE INVENTION

The present invention relates to telecommunications, and more particularly to group communication.

### BACKGROUND OF THE INVENTION

The Open Mobile Alliance (OMA) is a standards body that develops open standards for the communications industry. The OMA restricts itself to the standardization of applicative protocols and presumes the existence of a networking technology specified by outside parties. OMA specifications are agnostic of the particular cellular network technologies used to provide networking and actual data transport. For example, OMA specifications for a given function are the same with, for example, GSM, UMTS or CDMA2000 networks.

OMA Push To Talk over Cellular (PoC) service is a two-way form of communications that allows users to engage in immediate communication with one or more users. PoC service is similar to a "walkie-talkie" application where a user presses a button to talk with an individual user or broadcast to a group of participants. PoC has already evolved though a series of versions: PoCv1.0 allowed communication using voice only, PoCv2.0 allows also video and text messaging.

PoC provides several different types of sessions. In a pre-arranged PoC group session participants are defined in beforehand, and a PoC server invites the rest of the members when the first participant joins. A chat PoC group session is addressed with a predefined identifier, and users join and leave the chat PoC group as they like. In an ad-hoc PoC session participants are provided by the client in a SIP request. One-to-one PoC session refers to an ad-hoc PoC session with only two participants.

After a multiparty PoC session is established, a participant may decide to leave the session at any time. The session continues even after the participant leaves, if there are enough other participants remaining in the session. After leaving, the participant may also attempt to re-join the previously left session again. The re-join is naturally successful only if the session is still in progress. If the session has been terminated in the meantime, the attempt to re-join the session fails. Typically clients do not remember all the participants of the session after leaving the session, and are therefore unable to easily communicate again with participants of the left session. However, it has been noted that people often would like to call back the ad-hoc group to either re-discuss or follow-up, or to just discuss some important thing that they forgot to discuss during the call. Typically, such re-initiation or call back requests are made within a short duration after the call termination.

A solution already discussed in the auspices of OMA allows the PoC server to cache the list of participants after the session finishes. If a user that participated in the session attempts to re-join the session after the session termination, the server re-initiates the session again and invites the original participants to the re-initiated session. This approach has, however, some disadvantages.

The charging is complicated because the re-joining user does not know whether he is going to be connected to a session that still exists or whether the session is being re-initiated. In the first case the re-joining user may be charged only for data sent to him, but in the second case the re-joining user may possibly be charged for all the invited participants. On the other hand, if the costs are charged to the originator (the user that initiated the original session) even for the re-initiated session, the originator can be charged for the re-initiated session even if he does not participate the session, or even be aware about the session re-initiation. This may happen, for example, when originator of the session becomes offline after leaving the original session.

Furthermore, responsibilities of the re-initiated session may remain in the network of the originator, even if the initiator does not anymore participate in the re-initiated session. For example, if the originator is from one network and the other participants are from another network and originator rejects taking part in the re-initiated session, the network of the originator continues to provide services to users of other networks. To most network operators this is not acceptable.

The above disadvantages could be avoided by transferring the responsibility of storing the information on the participants to the PoC client. For example, the PoC client could subscribe to the participant information of the session and remember the participant uniform resource identifiers (URI) after leaving the PoC Session. Alternatively, the client could create a URI List or a Pre-arranged PoC Group instead of remembering the Participants URIs at the PoC Client. Those participant URIs could then be used to establish a new session. The disadvantage of this solution is that the client needs to separately subscribe for the participant information of the session, and store the subscribed information locally in the PoC client or in an XML Document Management Server (XDMS). This is not preferred, because the participant information is automatically available and already maintained in the PoC server performing the controlling function. Additional storage operation would also be inconvenient to the users and increase the amount of stored group information significantly.

### SUMMARY OF THE INVENTION

An object of the present invention is thus to provide a method and an apparatus for implementing the method so as to alleviate at least some of the above disadvantages. The objects of the invention are achieved by a method, a device and a computer program product, which are characterized by what is stated in the independent claims. The preferred embodiments of the invention are disclosed in the dependent claims.

The invention is based on the idea of storing in a server responsible for controlling the connection associated participant information identifying clients that participated or intended to participate the connection and providing this associated participant information to a client when a negative response to the request for re-joining the connection needs to be given to that client. The client can then re-activate the communication by re-initing the connection.

Compared to the proposed prior art solutions to re-activate terminated group sessions, the roles and responsibilities of the continued connection are more consistent. Still, the task of storing the information for the continued connection takes place in the element where it is most appropriately done.

### BRIEF DESCRIPTION OF THE DRAWINGS

In the following the invention will be described in greater detail by means of preferred embodiments with reference to the attached [accompanying] drawings, in which
Figure 1 illustrates configuration for an embodied communications system;
Figure 2 illustrates an embodied configuration for a server system and associated mobile station;
Figure 3 illustrates signaling messages in an ad-hoc PoC group session;
Figure 4 illustrates steps of a method implemented in the PoC server performing the controlling PoC function;
Figure 5 illustrates steps of a method implemented in a PoC client; and
Figure 6 illustrates an exemplary hardware configuration for the implementation of an embodied device

### DETAILED DESCRIPTION OF THE INVENTION

It is appreciated that the following embodiments are exemplary. Furthermore, although the specification may in various places refer to "an", "one", or "some" embodiment(s), reference is not necessarily made to the same embodiment(s), or the feature in question does not only apply to a single embodiment. Single features of different embodiments may be combined to provide further embodiments.

The invention is applicable to any communications system capable of providing communication activities in groups to which participants may be selected separately. In the following, the present invention will be described by means of a Push-to-talk over Cellular (PoC) media communication service in a third generation mobile communication system, without limiting the invention to this specific service or the terms used in the description of the embodiment.

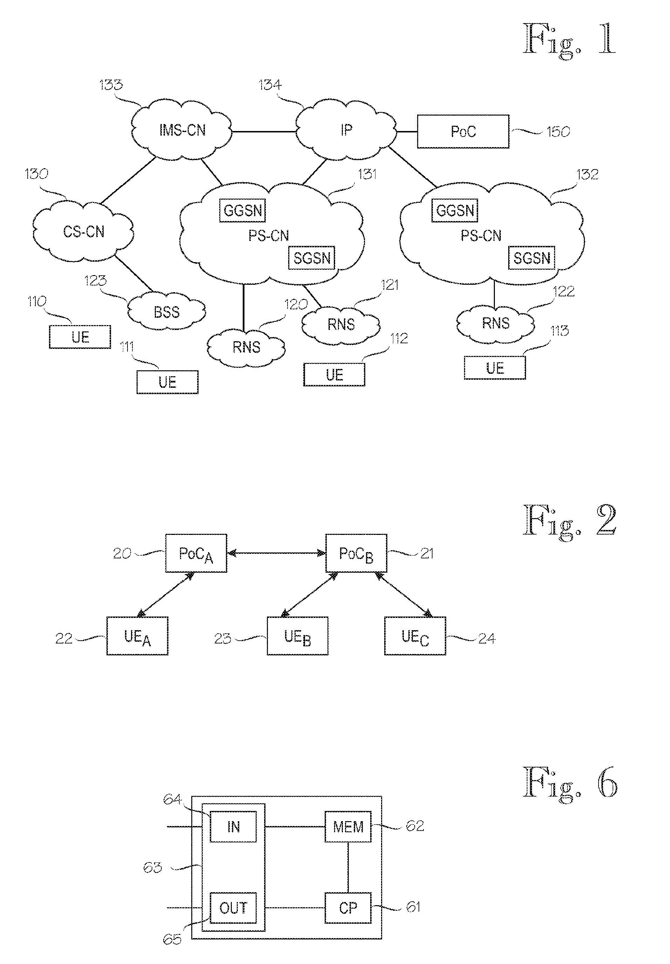

As illustrated in Figure 1, in the third generation (3G) mobile communications systems, a public land mobile network (PLMN) infrastructure may be logically divided into core network (CN) 130, 131, 132, 133, 134 and access network (AN) 120, 121, 122, 123 infrastructures. The access network AN refers to an infrastructure of points or nodes interconnected by communication paths. AN enables transmission of signals between users and the core network. Examples of access networks comprise base station subsystem (BSS) 123 for GSM, and radio network subsystem (RNS) or a radio access network (RAN) 120, 121, 122 for UMTS.

In the technical specifications of a third generation partnership project (3GPP), the core network CN is logically divided into a circuit switched (CS) domain 130, a packet switched (PS) domain 131, 132 and an IP multimedia subsystem (IMS) 133. The CS domain refers to a set of all CN entities offering a circuit switched type of connection for user traffic, as well as all the entities supporting the related signalling. A circuit switched type of connection is a connection for which dedicated network resources are allocated upon connection establishment and released upon connection release. A packet switched type of connection transports user information in packets so that each packet can be routed independently of a previous one. Examples of the PS domain include GPRS (General Packet Radio Service), and typical entities include a serving GPRS support node (SGSN) and a gateway GPRS support node (GGSN). The IP multimedia subsystem comprises CN elements for provision of multimedia services. The IP multimedia subsystem IMS 133 utilizes the PS domain to transport multimedia signalling and bearer traffic.

In voice communication with a "push to talk/release to listen" feature, a call may be based on the use of a pressel (push-to-talk switch) in a telephone as a switch: by pressing a pressel the user indicates his or her desire to speak, and the user equipment sends a service request to the network. Alternatively, a voice activity detector (VAD) or any suitable means can be used instead of the manual switch. The network either rejects the request or allocates the requested resources on the basis of predetermined criteria, such as availability of resources, priority of the requesting user, etc. At the same time, a connection is also established to a receiving user, or users in the case of group communication. After the voice connection has been established, the requesting user can talk and the other users can listen. When the user releases the pressel, or in the case of traffic inactivity, the event is detected in the network, and the resources may be released and/or a talk item may be granted to another user.

A server system 150 for provision of Push-to-talk Over Cellular (PoC) is illustrated as provided on top of the Packet Switched (PS) core network. The Packet Switched (PS) core network 131, 132, 133 of Figure 1 provides packet mode (e.g. IP) communication services to User Equipment (UE) 110, 111, 112, 113. UE accessing the PS CN, and the PS core network itself, utilizes the services provided by a Radio network subsystem (RNS) or Radio access network (RAN) 120, 121, 122, 123 to provide packet-mode communication between the UE and a PS CN subsystem. The multiple access method employed in an air interface in the RAN may be Time Division Multiple Access (TDMA), Frequency Division Multiple Access (FDMA), Code Division Multiple Access (CDMA), or any combination thereof.

Figure 2 illustrates an embodiment for a server system 150 and associated user equipment UE. In view of the description of Figure 1 a man skilled in the art is able to understand the interconnectivity of the elements of Figure 2. The description thus concentrates to the roles and function of the elements implementing the embodied operations.

Due to the great interest in the PoC services, individual vendors provided early adoptions of the emerging technology, primarily in the form of standalone PoC systems. Since then a group of interested organizations prepared an industry specification for PoC, with the aims of following existing 3^{rd} Generation Partnership Project (3GPP) IP Multimedia Subsystem (IMS) specifications. The standardization work to this direction has since then continued in Open Mobile Alliance (OMA) using the existing set of specifications as a starting point.

A PoC communication service is typically implemented with a communication server system while client applications reside in the user equipment or terminals. Establishment of connections in a PoC system is implemented using the mechanisms of a Session Initiation Protocol (SIP).

The embodied service system of Figure 2 shows two PoC servers PoC_{A} 20 and PoC_{B} 21, and three PoC clients (UE_{A}, UE_{B}, UE_{C}) 22, 23, 24 each configured to implement PoC service. It should be noted that only elements necessary for describing the present embodiment are shown in Figure 2. A more detailed description on the configuration of these elements is provided later on with Figure 6. In the following a connection for group communication is illustrated by means of a session, a connection for packet-switched communication between users or between users and applications during which any type of data can be transferred between the participants. It should be noted, however, that the solution is also applicable to connections for circuit switched communication.

In general, a PoC server comprises a group of management plane functions, control-plane functions and user-plane functions for implementing the application level network functionality for the PoC service. For example, PoC server may act, according to the application, as the end-point of SIP, Real-time Transport Protocol (RTP) and Real-time Transport Control Protocol (RTCP) signaling, provide SIP session handling, policy control for access to groups, group session handling, access control, do-not-disturb functionality, floor control functionality, talker identification, participants information, quality feedback, charging reports and media distribution.

A PoC server may perform a controlling PoC function or participating PoC function or both. The controlling PoC function and participating PoC function are different roles of the PoC server. It is noted that even if the elements are shown as separate entities, a PoC server may perform both a controlling PoC function and a participating PoC function at the same time. In a PoC session there is one participating PoC function per PoC client, but the PoC server may support simultaneous PoC sessions for the PoC client.

The determination of the PoC server role takes place during the PoC session setup and lasts for the duration of the whole PoC session. For different kinds of sessions there are typically default definitions on the server to perform the controlling PoC function. In addition there exist typically some mutually agreed service provider policies according to which a PoC server may instead select another PoC server to perform the controlling PoC function. There is only one PoC server performing the controlling PoC function in a PoC session.

The PoC server performing the controlling PoC function has an equal amount of SIP sessions and media, talk burst control and media burst control communication paths in one PoC session as there are participants in the PoC session. The PoC server performing the controlling PoC function does not have to have direct communication with the PoC clients for PoC session signaling. It may interact with the PoC clients also via one or more PoC servers that perform the participating function for the PoC clients.

Figure 2 illustrates a configuration of an exemplary session for group communication between the three PoC clients UE_{A}, UE_{B}, UE_{C} 22, 23, 24. UE_{A} 22 acts as an originating party, and during the PoC session setup PoC_{A} 20 to which UE_{A} 22 has a direct communication path, assumes the responsibility of performing the controlling PoC function. The other PoC clients UE_{B 23} and UEc 24 are invited to the session by PoC_{A} 20 via their respective PoC servers PoC_{B} 20. PoC_{B} 21 performing the participating PoC function has a direct communication path with PoC clients UE_{B} 23 and UE_{C} 24 and also a direct communication path with PoC_{A}.

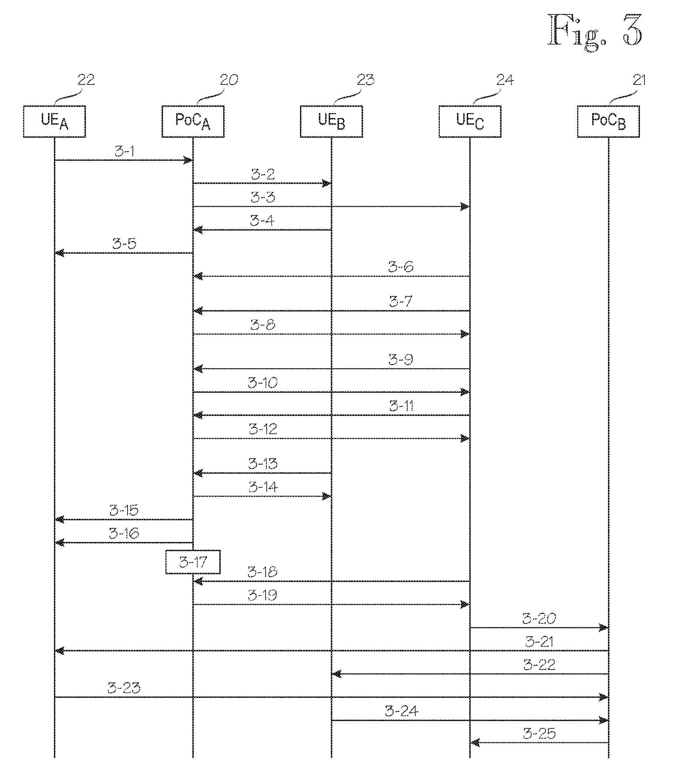

Figure 3 illustrates signaling messages in an ad-hoc PoC group session for communicating in a group of PoC clients UE_{A} 22, UE_{B} 23, UE_{C}, 24 of Figure 2. It should be noted that in Figures herein only steps and points necessary for illustrating the present embodiment are illustrated. The steps/points, signaling messages and related functions described may not necessarily be in absolute chronological order, and some of the steps/points may be performed simultaneously or in an order differing from the given one. Other functions can also be executed between the steps/points or within the steps/points and other signaling messages sent between the illustrated messages.

In an ad-hoc PoC group session setup one PoC User selects several other PoC users, or pre-arranged PoC groups, or both to be invited to the PoC session. Accordingly, the originating PoC client UE_{A} 22 initiates an ad-hoc PoC group session by sending (step 3-1) to the PoC server PoC_{A} 20 in its home PoC Network a request (SIP INVITE) to initiate a PoC session. The list of PoC Addresses of invited PoC users in the request identifies PoC clients UE_{B} 23 and UE_{C} 24. The INVITE request is routed to PoC_{A} 20 based on PoC address of UE_{A} 22 and PoC service indication. Since this is an ad-hoc PoC group session setup, PoC_{A} 20 takes the roles of the controlling PoC function and participating PoC function. PoC_{A} 20 generates a PoC session identity and sends (steps 3-2 and 3-3) invitations comprising the generated PoC session identity to UE_{B} 23 and UE_{C} 24.

The invited PoC client UE_{B} 23 accepts the PoC session request by sending (step 3-4) to PoC_{A} 20 an OK response. Upon arrival of the OK response from UE_{B} 23, PoC_{A} 20 generates and sends (step 3-5) an OK response to the originating PoC client UE_{A}22. The OK response comprises also the PoC session identity. When at least one participant is connected, UE_{A}22 is ready to send media to PoC_{A} 20. If none of the invited PoC users accepts the invitation, the PoC_{A} 20 rejects the PoC session.

The other invited PoC client UE_{C} 24 is, for one reason or another, not able to devote to the session entirely and after accepting the session invitation (step 3-6) leaves the session (steps 3-7 and 3-8) followed by re-join (steps 3-9 and 3-10) and another leaving of the session (steps 3-11 and 3-12). PoC_{A} 20 performing the controlling PoC function acknowledges the re-joining and leaving events, respectively (steps 3-8, 3-10, 3-12). Depending on the application, leaving and re-joining events can be informed to other participating PoC Clients (not shown).

Since there is at least one invited member participating the PoC session, the session will go on, notwithstanding the events (steps 3-6 to 3-12) between PoC_{A} 20 and UE_{C} 24. However, at some point of the PoC session, also the invited PoC client UE_{B} 23 leaves the session by sending (step 3-13) a BYE request, which PoC_{A} 20 subsequently acknowledges (step 3-14). PoC_{A} 20 terminates the session by sending (step 3-15) to the originating PoC client UE_{A} 22 a BYE request. UE_{A} 22 acknowledges (step 3-16) its leaving event and thereby terminates the session.

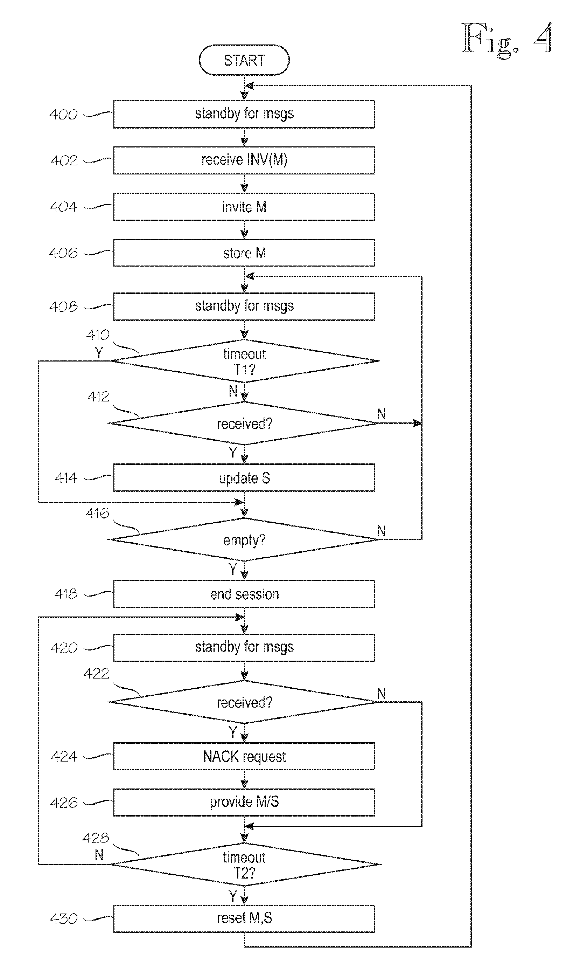

Instead of abolishing the PoC session completely, PoC_{A} 20 stores (step 3-17) the PoC session identity and associated participant information of the PoC session for a defined period in its memory. When the PoC client UE_{C} 24 again attempts to join the PoC session by sending (step 3-18) a re-joining INVITE request to PoC_{A} 20, PoC_{A} 20 identifies the PoC session identity of the terminated session and, accordingly, sends (step 3-19) to UE_{C} 24 a negative response. The negative response may be, for example, a conventional error message. According to the invention, the response is complemented with participant information identifying clients that participated or intended to participate the terminated PoC session. A more detailed description on the content of the participant information is provided with the description of Figure 4.

At this point, UE_{C} 24 is able to decide whether it wishes to re-activate the PoC session with all or part of the participants identified in the received participants list. If yes, UE_{C} 24 becomes an originating PoC client and it initiates the ad-hoc PoC group session by sending (step 3-20) to the PoC server PoC_{B} 21 in its home PoC Network an INVITE request identifying all or part of the participants identified in the received participants list. As in a conventional ad-hoc PoC group session, PoC_{B} 21 sends (steps 3-21 and 3-22) the invitations, receives the responses (steps 3-23 and 3-24) and acknowledges (step 3-25) an established PoC group session to UE_{C} 24.

Due to the embodied solution the original group session can be re-activated, but the re-activation takes place virtually such that the responsibilities of the re-activated session are transferred to the party that requests the re-activation. For example, when UE_{C} 24 resumes the role of the originating party, charges resulting from the re-activated part of the session will be addressed to his subscription. Additionally, the role of the controlling PoC function will be assumed by the PoC server PoC_{B} 21 in the home network of the requesting user UE_{C} 24.

Figure 4 illustrates steps of a method implemented in the PoC server performing the controlling PoC function PoC_{A} 20 of Figures 2 and 3. The procedure begins in a stage where PoC_{A} 20 is switched on and standby (step 400) to session initiation requests. When PoC_{A} 20 receives (step 402) request INV(M) for inviting a list of members M to a group session, it sends (step 404) the invitations to the group M of users, stores (step 406) the list of members M, and becomes standby (step 408) for messages associated to the group session. PoC_{A} 20 is configured with a registry S for activated participants, and a registry timeout period T1. To the registry for activated participants PoC_{A} 20 stores information on invited members of the group session that have at least once responded to the invitation positively, and their respective status information. The registry timeout period T1 corresponds to the time the controlling PoC function tries to attempt to invite participants M to the group session without any positive response. As long as that registry timeout period T1 is not reached (step 410), PoC_{A} 20 checks (step 412) whether a message from one of the invited members is received. If yes, PoC_{A} 20 updates (step 414) the registry S for activated participants according to the message. Whenever the message carries information on accepting an invitation to the session or leaving/re-joining the session, PoC_{A} 20 adds to S subscriber information on the member, and information on participating status of the user. After the update, PoC_{A} 20 checks (step 416) whether S is empty. If not, PoC_{A} 20 returns to step 406 to receive a next message. If S is empty, there are no more participants to the call and PoC_{A} 20 terminates (step 418) the group session.

According to the invention, PoC_{A} 20 is also configured with a re-activation timeout period T2 that corresponds to a defined time period during which PoC_{A} 20 stores participant information on the session. Accordingly, after termination of the group session, PoC_{A} 20 becomes standby (step 420) for further messages requesting joining or re-joining to the group session. If such message is received (step 422), PoC_{A} 20 sends (step 424) to the requesting member a negative response rejecting the possibility to join or re-join the original session anymore. In addition, PoC_{A} 20 sends (step 426) to the requesting member participant information on the session.

Participant information of the connection refers to information on a group of clients that have a possibility to become a member of the group deploying the connection. Depending on the application, the content of the participant information in the embodied solution may vary.
- In a basic variant the participant information includes information identifying the list M of members as originally provided by the inviting member. In this case the participant information does not take into account whether the invited members ever joined the session or not.
- In another variant the participant information includes information identifying the list M of members as provided by the original inviting member UE_{A} 22, and the original inviting member UE_{A} 22 itself.
- In another variant the participant information includes information identifying the list M of members as originally provided by the inviting member UE_{A} 22, a list N of members invited to the session at a later stage, and the original inviting member UE_{A} 22 itself.
- In another variant the participant information includes information identifying the list M of members as originally provided by the inviting member UE_{A} 22, a list N of members invited to the session at a later stage, and the original inviting member UE_{A} 22 itself. In addition, participant information includes timestamps for instances when a specific member joined and/or left the group session such that it can determine which members were present at a particular point of time during the session. This way the requesting member may, for example, re-activate the group session with the members that were participating the original group session at the time the requesting member left the group session. Other points of time may be applied without deviating from the scope of protection. Alternatively, PoC_{A} 20 may make a determination on the basis of the information in the registry S for activated participants, and send the processed list of participants to the requesting member. For this, PoC_{A} 20 needs to be configured with at least one determination criterion, for example, 'a list of members joined to the group session at the time of the requesting member latest leaving of the group session'.
Other variants of the participant information may be applied without deviating from the scope of protection.

When PoC_{A} 20 has sent the information, it will check (step 428) whether the re-activation timeout period T2 has been exceeded. If not, the procedure returns to step 420 to wait for further messages in which members of the original group session request joining or re-joining to the group session. If yes, PoC_{A} 20 resets (step 430) the list M and registry S and returns to step 400.

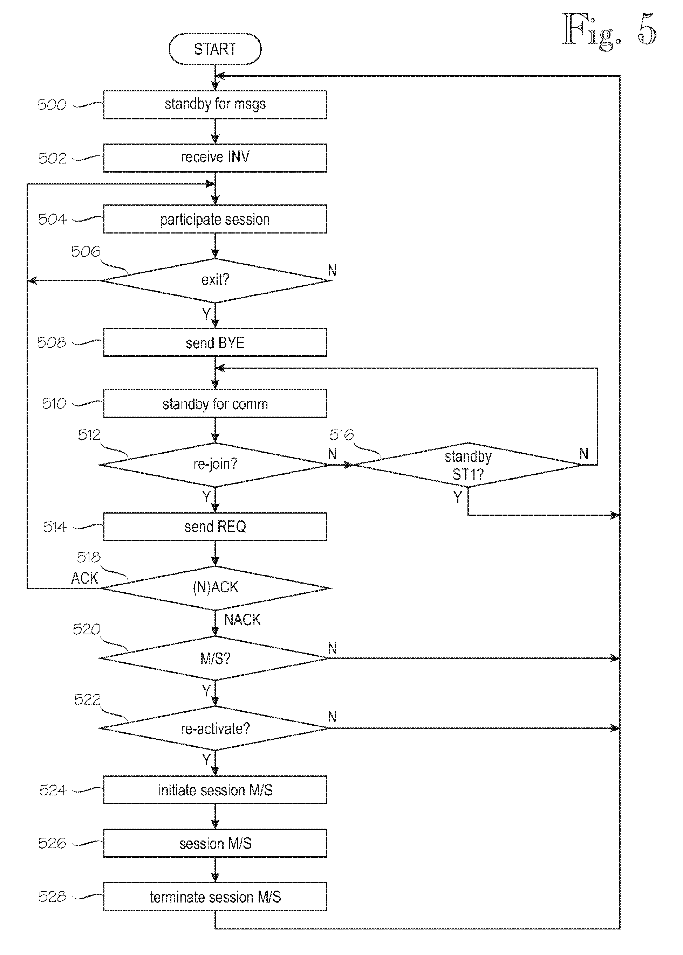

Figure 5 illustrates steps of a method implemented in a PoC client UE_{C} 24 of Figures 2 and 3. In the embodiment of Figure 5 the device is a mobile station to which a PoC client is incorporated. The procedure begins in a stage where UE_{C} 24 is switched on and standby (step 500) in order to participate to PoC group sessions. When UE_{C} 24 receives (step 502) an invitation (cf. step 404 of Figure 4) to a PoC group session, it first joins (step 504) the session. UE_{C} 24 checks (step 506) whether there exists a need to change the joining status. Such need may result normally from termination of the session or from a command received from the user of the mobile station through the user interface. It may also result from some prioritization settings between various user activities. Whatever the reason, in this case UE_{C} 24 sends (step 508) to PoC_{A} 20 a notification on leaving the group session, but remains standby (step 510) for re-joining the group session. Otherwise it remains included (step 504) in the group session.

UE_{C} 24 is configured with a standby time ST1 that corresponds with the time period UE_{C} 24 remains standby for re-joining the call. If a need for re-joining exists (step 512), for example, due to a command received through the user interface, UE_{C} 24 sends (step 514) to PoC_{A} 20 a request to re-join the session. If no such need is detected, UE_{C} 24 checks (step 516) whether the standby time ST1 is exceeded, and either remains standby by returning to step 510 or ends standby state by returning back to step 500. If the group session is still ongoing, UE_{C} 24 receives (step 518) from PoC_{A} 20 a positive acknowledgement ACK, and re-joins the group session by returning to step 504.

If the group session has in the meanwhile terminated, UE_{C} 24 receives (step 518) from PoC_{A} 20 a negative acknowledgement NACK, and checks (step 520) further whether a participant information M and/or S is also received. If the re-activation timeout period T2 of PoC_{A} has expired, PoC_{A} sends only the NACK messages. If not, UE_{C} 24 receives from PoC_{A} also the participant information M/S. UE_{C} 24 checks (step 522) from its configuration data of from the user through the user interface whether to re-activate the group session. If not, UE_{C} 24 returns to step 500. Otherwise UE_{C} 24 initiates (step 524) the session by sending to its own PoC server PoC_{B} 21 a request to invite all or part of PoC clients identified in the participant information M/S to a group session. The selection of participants from the participant information M/S may be done interactively with the user of UE_{C} 24 or according to a predefined profile associated to UE_{C} 24. Throughout the ongoing re-activated session (step 526) PoC_{B} 21 performs the controlling PoC function. At some point UE_{C} 24 receives (step 528) from PoC_{B} 21 an indication on a terminated session and returns to step 500.

The exemplary embodiment of Figures 3 to 5 illustrates a case where the original group session is re-activated by a member unsuccessfully attempting to re-join the group session after at least once first joining and leaving the group session. However, the re-activation is also possible to a member that has been originally invited to the group session but, for one reason or another, attempts to join the group session only after the session has already been terminated. Also in this case the PoC server performing the controlling function can return the participant information and the member wishing to re-join is able to re-activate the call.

Figure 6 illustrates an exemplary hardware configuration for the implementation of an embodied device, for example applicable as the PoC server PoC_{A} 20 of Figure 4 or the mobile station UE_{C} 24 of Figure 5. The device comprises a control unit 61, an element that comprises an arithmetic logic module; a number of special registers and control circuits. Connected to the processing unit is a memory unit 62, a data medium where computer-readable data or programs or user data can be stored. The memory means typically comprise memory modules that allow both reading and writing (RAM), and memory modules whose contents can only be read (ROM). The unit also comprises an interface unit 63 with input unit 64 for inputting data for internal processing in the element, and output unit 65 for outputting data from the internal processes of the element.

Examples of said input unit 64 in the PoC server comprise plug-in units acting as a gateway for information delivered to its external connection points. For receiving information from the operator, the input unit 64 may also comprise a keypad, or a touch screen, a microphone, or the like. Examples of said output unit 55 in the PoC server include plug-in unit feeding information to the lines connected to its external connection points. For outputting information to the operator, the output unit 65 may also comprise a screen, a touch screen, a loudspeaker, or the like.

The interface unit 63 of a mobile station typically comprises at least a user interface unit for communicating with the user and a radio interface unit for communication over the radio access network. In addition, the user terminal may comprise additional interface units, for communication over another type of network, or in another frequency, or for local communication.

The control unit 61, memory unit 62, and interface block 63 are electrically interconnected to perform systematic execution of operations on received and/or stored data according to predefined, essentially programmed processes of the element. In solutions according to the embodiments of the invention, these operations comprise functions for implementing the logical units, operations and interfaces of the PoC server and PoC client elements, as described in Figures 3 to 5 above.

The computer programs may be stored on a computer program distribution medium readable by a computer or a processor. The computer program medium may be, for example but not limited to, an electric, magnetic, optical, infrared or semiconductor system, device or transmission medium. The computer program medium may include at least one of the following media: a computer readable medium, a program storage medium, a record medium, a computer readable memory, a random access memory, an erasable programmable read-only memory, a computer readable software distribution package, a computer readable signal, a computer readable telecommunications signal, computer readable printed matter, and a computer readable compressed software package.

It will be obvious to a person skilled in the art that, as the technology advances, the inventive concept can be implemented in various ways. The invention and its embodiments are not limited to the examples described above but may vary within the scope of the claims.

## Claims

1. A method, comprising:
controlling in a network node (20) a connection for communicating in a group of clients;
storing (406, 414) participant information associated with the connection, the participant information identifying clients participating or intended to participate the connection;
receiving (422), after terminating the connection, from a client a request to join the connection;
**characterized by**
providing (426) to the client a negative response to the request for re-joining the connection and the participant information associated with the connection.

2. A method, comprising:
controlling operations of a client (24) in a communication device;
receiving (502) information on a connection for communicating in a group of clients, the connection being controlled by a network node;
sending (504, 514) to the network node a request to participate the connection;
**characterized by**
receiving (518, 520) from the network node a negative response to the request to participate the connection, and participant information associated with the connection, the participant information identifying clients that participated or were intended to participate the connection;
initiating (524) a connection in a group comprising the clients identified in the participant information.

3. A device (20), comprising:
an interface unit (63) configured to enable communications in a communications system;
a memory (62) configured to store participant information associated with a connection for communicating in a group of clients, participant information identifying clients participating or intended to participate the connection;
a control unit (61) operatively connected with the memory and the interface unit and configured to operate the device to:
control a connection for communication in a group of clients;
receive, after terminating the connection, from a client a request to join the connection;
provide to the client a negative response to the request for joining the connection and the participant information associated with the connection.

4. A device (20) according to claim 3, **characterized by** the connection being a packet switched session or a circuit switched call.

5. A device (20) according to claim 3 or 4, **characterized in that** the connection is for an ad-hoc group session and the control unit is further configured to operate the device to receive from an inviting client a list of clients to be included in the ad-hoc group session.

6. A device (20) according to claim 5, **characterized in that** the participant information includes identities of a list of clients to be included in the ad-hoc group session.

7. A device (20) according to claim 5, **characterized in that** the participant information includes identities of a list of clients to be included in the ad-hoc group session and the identity of the inviting client.

8. A device (20) according to claim 5, **characterized in that** the participant information includes timestamps for instances when a specific member joined and/or left the group session

9. A device (20) according to any of the previous claims 3-8, **characterized by** the control unit being further configured to operate the device to store in the memory unit (62), after terminating the connection, participant information associated to the connection for a predefined period after the terminated connection.

10. A device according to any of the previous claims 3 to 9, **characterized by** the negative response being an error indication.

11. A terminal device (24), comprising:
a memory (62);
an interface unit (63) configured to enable communications in a communications system;
a control unit (61) operatively connected with the interface unit and the memory and configured to operate the device to:
receive information on a connection for communicating in a group of clients, the connection being controlled by a network node;
send to the network node a request to participate the connection;
**characterized by** the control unit being further configured to operate the device (24) to:
receive from the network node a negative response to the request to participate the connection, and participant information associated with the connection, the participant information identifying clients that participated or were intended to participate the connection;
initiate a connection in a group comprising the clients identified in the participant information.

12. A terminal device (24) according to claim 11, **characterized by** the connection being a packet switched session or a circuit switched call.

13. A terminal device (24) according to claim 11 or 12, **characterized in that** the participant information includes timestamps for instances when a specific member joined and/or left the group session and the control unit is further configured to operate the device to select from the participant information clients to be invited to the new session on the basis of the timestamps in the participant information.

14. A communications system comprising a network node according to any of claims 3 to 10 and a mobile station according to any of claims 11 to 13.

15. A computer program product readable by a computer and encoding a computer program of instructions for executing a computer process for controlling functions in a network node of a communication system, **characterized by** the process including:
controlling in a network node a connection for communicating in a group of clients;
storing participant information associated with the connection, the participant information identifying clients participating or intended to participate the connection;
receiving, after terminating the connection, from a client a request to join the connection;
providing to the client a negative response to the request for re-joining the connection and the participant information associated with the connection.

16. A computer program product readable by a computer and encoding a computer program of instructions for executing a computer process for controlling functions in a terminal device of a communication system, **characterized by** the process including:
controlling operations of a client in a communication device;
receiving information on a connection for communicating in a group of clients, the connection being controlled by a network node;
sending to the network node a request to participate the connection;
receiving from the network node a negative response to the request to participate the connection, and participant information associated with the connection, the participant information identifying clients that participated or were intended to participate the connection;
initiating a connection in a group comprising the clients identified in the participant information.
